# EUROPEAN PATENT SPECIFICATION

(11) **EP 3 329 759 B1**
(45) Date of publication and mention of the grant of the patent: **07.10.2020**
(21) Application number: 17204490.1
(22) Date of filing: 29.11.2017
(51) Int. Cl.: A01D 34/66, A01D 34/71, A01D 34/00

(54) **GRASS MOWER DEVICE AND RIDING TYPE GRASS MOWER HAVING THE GRASS MOWER DEVICE**
RASENMÄHERVORRICHTUNG UND AUFSITZRASENMÄHER MIT DER RASENMÄHERVORRICHTUNG
DISPOSITIF FORMANT TONDEUSE À GAZON ET TONDEUSE À GAZON DE TYPE À CONDUITE POSSÉDANT LE DISPOSITIF FORMANT TONDEUSE À GAZON

(30) Priority: 02.12.2016 JP 2016235231; 02.03.2017 JP 2017039297; 13.04.2017 JP 2017080010
(43) Date of publication of application: 06.06.2018
(73) Proprietor: Kubota Corporation, Osaka 556-8601 (JP)
(72) Inventor: SENDA, Ryotaro, SAKAI-SHI, OSAKA, 590-0823 (JP); UEMOTO, Kensuke, SAKAI-SHI, OSAKA, 590-0823 (JP); MIHARA, Akihito, SAKAI-SHI, OSAKA, 590-0823 (JP); KANAI, Toshiki, SAKAI-SHI, OSAKA, 590-0823 (JP); AKAI, Yuto, SAKAI-SHI, OSAKA, 590-0823 (JP)
(74) Representative: Cabinet Beau de Loménie

(56) References cited:
- EP-A1- 0 731 629
- WO-A1-2017/014174
- JP-A- 2006 020 531
- US-A- 4 008 559
- US-A- 5 465 564
- US-A- 5 791 132
- US-A- 5 913 804

## Description

### BACKGROUND OF THE INVENTION

### 1. Field of the Invention

The invention is directed to a grass mower device and a riding type grass mower having the grass mower device.

### 2. Description of the Related Art

### (1) First Related Art

A grass mower device disclosed in JP 2006-020531 A includes a cutter blade housing, and a cutter blade mounted inside the cutter blade housing to be rotatable about an axis extending vertically relative to the cutter blade housing, so that grass cutting (mowing) operation is effected inside the cutter blade housing by the cutter blade. At a lateral portion of the cutter blade housing, a discharge opening is formed and grass clippings cut by the cutter blade will be discharged through the discharge opening from the inside of the cutter blade housing to the outside. Further, there is provided a discharge-opening cover pivotable between a lowered closing posture for covering an upper side of the discharge opening and an elevated opening posture for uncovering the discharge opening. In JP 2006-020531 A, the grass mower device is configured as a mower. The mower includes a mower deck acting as the cutter blade housing, a blade acting as the cutter blade, and an exit cover acting as the discharge-opening cover.

With such a conventional grass mower device, a spring is provided for urging the discharge-opening cover to the lowered closing posture. In operation, after the discharge-opening cover is switched to the elevated opened posture, the discharge-opening cover will be returned to the lowered closing posture by the spring without any special closing operation. Also, the discharge-opening cover set to the lowered closing posture is maintained under the lowered closing posture by the spring.

With the conventional arrangement, in order to hold the discharge-opening cover under the lowed closing posture in a reliable manner so that this cover will not easily be switched to the elevated opening posture, it is necessary to increase the urging force of the spring. This will provide heavy feel in operation for switching the discharge-opening cover to the elevated opening posture.

Thus, there is a need for a grass mower device configured such that the discharge-opening cover is returned to the lowered closing posture without requiring any special closing operation, and that the discharge-opening cover can be maintained under the lowered closing posture in a reliable manner without requiring any special holding operation and yet the discharge-opening cover can be switched to the elevated opening posture with a light operational feel. WO 2017/014174 A1 discloses a grass mower device according to the preamble of claim 1. Another grass mower device is disclosed in US 5 913 804 A.

### (2) Second Related Art

A grass mower device disclosed in JP 2008-278818 A (or US 2008/0092509 A1 corresponding thereto) includes a guide member for guiding discharged grass clipping to a laterally outer side of a vehicle body. The guide member is provided on a laterally outer side of a discharge opening for discharging grass clippings formed at a lateral one side portion of a mower deck, and the guide member is supported such that it may be pivotably raised/collapsible about a transverse axis extending in the horizontal direction. Whereby, it is possible to effect posture switchover of the guide member between a state in which the guide member is set to a collapsed posture along the horizontal direction for guiding discharging of the grass clippings to the lateral side, and a state in which the guide member is raised to close the discharge opening for facilitating a mulching operation.

In the grass mower device disclosed in JP 2008-278818 A (US 2008/0092509 A1), the guide member is pivotally urged to the collapsed posture thereof by means of an urging mechanism using a torsion spring. This arrangement is provided for suppressing looseness of the guide member under the collapsed posture in association with traveling of the vehicle body, by means of the urging force of the urging mechanism and maintaining the guide member set under the raised posture as being pressed against a member acting as a stopper. With this, the posture change of the guide member is made possible advantageously, such that in a use mode of side discharge type for discharging grass clippings to the lateral outer side, the collapsed posture of the guide member may be maintained, whereas in a use mode of mulching type involving no grass clipping discharging, the state of not allowing the guide member to extend to the lateral outer side may be maintained.

However, in order to reliably suppress looseness of the guide member under the collapsed posture by vibration associated with working traveling of the vehicle body, a significant urging force is required. However, with such significant increase of the urging force, the operation of posture switchover of the guide member will encounter heavy operational resistance, thus making the operation difficult. In this regard, there remains room for improvement.

### (3) Third Related Art

A grass mower device disclosed in JP 2006-020531 A (or US 2009/0178382 A1 corresponding thereto) includes a mulching baffle plate which is provided inside a cutter blade housing and which surrounds a rotational range of the cutter blade as seen in the vertical direction of the cutter blade housing. This grass mower device is configured such that grass clippings produced by cutting by the cutter blade can be shredded by cutting operation of the cutter blade inside the mulching baffle plate.

In the grass mower device disclosed in JP 2006-020531 A (US 2009/0178382 A1), there are provided a cut glass guide member disposed at a front circumference of a rotational range of the cutter blade and a rear baffle plate disposed at a rear circumference of the rotational range of the cutter blade, the cut grass guide member and the rear baffle plate together constituting a mulching baffle plate.

With the grass mower device described above, if a large amount of grass clippings stay inside the mulching baffle plate, this can result in clogging. With clogging of the grass clippings, a mowing failure may occur.

Then, there is a need for a grass mower device that can prevent the avoidance of grass clippings inside the mulching baffle plate from providing adverse influence on grass mowing by the cutter blade and that yet can prevent clogging of grass clippings inside the mulching baffle plate.

### SUMMARY OF THE INVENTION

(1) The invention is defined by a grass mower device comprising:
   a cutter blade housing;
   a cutter blade mounted inside the cutter blade housing to be rotatable about a vertically oriented axis, a discharge opening being formed at a lateral outer side of the cutter blade housing for discharging grass clippings produced by the cutter blade to the outside of the cutter blade housing;
   a discharge-opening cover pivotable between a lowered closing posture for covering an upper side of the discharge opening and an elevated opening posture for uncovering the discharge opening;
   a cover urging mechanism for urging the discharge opening cover to the closing posture;
   a lock mechanism switchable between a locking state for holding the discharge-opening cover under the closing posture and a lock releasing posture for allowing switchover of the discharge-opening cover to the opening posture;
   a lock urging mechanism for urging the lock mechanism to the locking state, the lock urging mechanism being configured to apply an urging force to the lock mechanism in response to switchover of the discharge-opening cover to the closing posture; and
   an operational portion for switching the lock mechanism to the lock releasing posture against the urging force of the lock urging mechanism;
   wherein the lock mechanism comprises a stopper member pivotally operated about a vertically-oriented support shaft of the cutter blade housing; and
   the stopper member is displaceable between a stopper position for coming into contact with the discharge-opening cover to inhibit elevation of the discharge-opening cover from the closing posture, and a stopper releasing position for releasing the contact.

   With this arrangement, by switching the lock mechanism to the lock releasing state by an operation on the operational portion, the closing lock of the discharge-opening cover by the lock mechanism can be released, so that the discharge-opening cover can be switched to the elevated opening posture against the cover urging mechanism. By releasing the opening operation of the discharge-opening cover, the discharge-opening cover is switched to the lowered closing posture by the cover urging mechanism. Further, by releasing the operation of the operational portion for switching the lock mechanism to the lock releasing posture, the lock mechanism is switched to the locking state by the lock urging mechanism and the discharge-opening cover is locked under the lowered closing posture by the lock mechanism.
   Therefore, without requiring any special operation for closing the discharge-opening cover, the discharge-opening cover is returned from the elevated opening posture to the lowered closing posture. Also, without requiring any special operation for switching the lock mechanism to the locking state, the discharge-opening cover is locked under the lowered closing posture by the lock mechanism. Thus, without requiring any special operation for holding the discharge-opening cover under the lowered closing posture, the discharge-opening cover can be maintained under the lowered closing posture in a reliable manner.
   Since the discharge-opening cover is maintained under the lowered closing posture by the locking by the lock mechanism, in comparison with the arrangement of maintaining by an urging force of the cover urging mechanism, the cover urging mechanism can be provided with only such urging force sufficient for enabling the lowering operation of the discharge-opening cover. Further, the lock urging mechanism can be provided with only such urging force sufficient for switchover of the lock mechanism to the locking state. As a result, the discharge-opening cover can be switched to the elevated opening posture with a light operational feel.
   With the above arrangement, in comparison with e.g. an arrangement wherein the discharge-opening cover is maintained under the lowered closing posture by means of a braking force applied to pivoting of the discharge-opening cover, this can be realized by the simple arrangement of providing a stopper member which is position displaceable.
   According to another preferred embodiment, the operational portion comprises a man-operational portion provided in the stopper member.
   With this arrangement, since the stopper member is switched to the stopper releasing position by direct manual operation of the stopper member, the operational arrangement can be obtained easily.
(2) In view of Second Related Art, in another aspect of the disclosure which is not claimed, there is proposed a grass mower device as under:
   A grass mower device comprising:
   a cutter blade housing;
   a cutter blade mounted inside the cutter blade housing to be rotatable about a vertically oriented axis, a discharge opening being formed at a lateral outer side of the cutter blade housing for discharging grass clippings produced by the cutter blade to the outside of the cutter blade housing;
   a guide member provided at a lateral outer side of the discharge opening for guiding the grass clippings discharged through the discharge opening to the lateral outer side, the guide member being displaceable between a raised posture for opening the discharge opening and a collapsed posture for guiding the grass clippings discharged from the discharge opening;
   an urging mechanism for elastically urging the guide member toward the collapsed posture side; and
   a lock mechanism for locking the guide member in position under the collapsed posture.

   With the above arrangement, since there is provided an urging mechanism for elastically urging the guide member toward the collapsed posture side, it is possible to constantly urge the guide member toward the collapsed posture side, so that a situation of the discharge opening being left open inadvertently can be avoided. And, since the collapsed posture can be maintained reliably by the lock mechanism, even if a pushing-up external force is applied to the guide member from the lower side thereof, inadvertent posture switchover of the guide member to the raised posture can be avoided.
   Moreover, since the collapsed posture of the guide member is maintained in a reliable manner by the lock mechanism, there is no need to increase the urging force of the urging mechanism to such a degree as may inhibit posture switchover of the guide member toward the raised posture side. Rather, it can be set as a relatively weak urging force. Therefore, there is achieved an advantage that the constant urging of the guide member toward the collapsed posture side, the suppression of looseness of the guide member, and the posture switchover to the raised posture can be implemented in a reliable manner by using such relatively weak urging force of the urging mechanism. According to one preferred embodiment, the guide member is supported by the cutter blade housing to be pivotable relative thereto; and
   the lock mechanism includes:
   a retaining member provided in one of the cutter blade housing and the guide member;
   a retained member provided in the other of the cutter blade housing and the guide member; and
   a retention urging spring for elastically urging the retaining member toward engagement with the retained member.

   With this arrangement, since the lock mechanism is provided with a retention urging spring for elastically urging the retaining member toward engagement with the retained member, only by operating the guide member to the predetermined collapsed position, the retaining member can be engaged with the retained member, thus providing the locking state automatically.
   According to another preferred embodiment, the urging force of the urging mechanism for urging the guide member from the raised posture to the collapsed posture side is set greater than frictional resistance due to contact between the retaining member urged to the engagement side by the retention urging spring and the retained member.
   With the above arrangement, the returning urging force of the urging mechanism is set greater than the frictional resistance due to the contact between the retaining member urged to the engagement side by the retention urging spring and the retained member.
   Namely, the urging force of the retention urging spring toward the engagement side acts as a frictional resistance due to the contact between the retaining member and the retained member against the movement of the guide member to the collapsing side by the returning urging force of the urging mechanism toward the collapsed posture side. Therefore, when the guide member is being manually operated to the raised posture, the above force will function to assist this manual operational force, so that the maintenance of the raised posture of the guide member can be effected easily with a relative light operational force.
   And, when the operator's hand is removed to release the operation of maintaining the guide member under the raised posture, the frictional resistance by the urging force toward the engagement side by the retention urging spring having weak urging force is insufficient to resist the returning urging force toward the collapsed posture side by the urging mechanism, so the guide member will be automatically returned to the collapsed posture side.
(3) In view of Third Related Art, in yet another aspect of the disclosure which is not claimed, there is proposed a grass mower device as under:
   A grass mower device comprising:
   a cutter blade housing;
   a cutter blade mounted inside the cutter blade housing to be rotatable about a vertically oriented axis;
   a mulching baffle plate provided inside the cutter blade housing and surrounding a rotational range of the cutter blade as seen in a vertical direction of the cutter blade housing;
   wherein the cutter blade includes a cutter blade portion and a wind generation portion raised from a leading end portion of the cutter blade portion;
   the mulching baffle plate includes a rear plate portion disposed on more rear side of the cutter blade housing than the vertically oriented axis; and
   a lower end of the rear plate portion is located upwardly of the cutter blade portion.

   With the above arrangement, the ground height of the rear plate portion of the mulching baffle plate is higher than the ground height of the cutter blade portion of the cutter blade. So, grass clippings present inside the mulching baffle plate can be readily discharged to the rear side of the cutter blade rotational range through a gap between the rear plate portion and the ground surface. As a result, staying of a large amount of grass clippings inside the mulching baffle plate can be prevented.
   Grass clippings that have been discharged to the rear side of the cutter blade rotational range will drop onto a site of grass mowing, thus presenting no obstacle for the cutting operation by the cutter blade.
   Therefore, clogging of grass clippings inside the mulching baffle plate will hardly occur and also the grass clippings discharged from the mulching baffle plate will not interfere with grass cutting operation. So, the grass cutting operation can be carried out in an efficient manner.
   According to one preferred embodiment, the lower end of the rear plate portion is located upwardly of the wind generation portion.
   With this arrangement, the ground height of the rear plate portion is formed even higher, thus creating an even greater clearance between the rear plate portion and the ground surface, so that the grass clippings can be discharged more easily to the rear side of the cutter blade rotational range. According to another preferred embodiment, the mulching baffle plate includes a front plate portion disposed on more front side of the cutter blade housing than the vertically oriented axis; and
   a lower end of the front plate portion is located downwardly of the cutter blade portion.
   With this arrangement, the ground height of the front plate portion is rendered lower than the ground height of the cutter blade portion, thus rendering the clearance between the front plate portion and the ground surface smaller. So, inadvertent discharge of grass clippings to the front side of the cutter blade rotational range to interfere with the grass cutting operation can be effectively prevented.
   According to still another preferred embodiment, the grass mower device further comprises a guide member provided on more front side of the cutter blade housing than the vertically oriented axis in the rotational range and configured to guide grass clippings downwards.
   With this arrangement, under the dropping guidance provided by the guide member, grass clippings will be caused to flow toward the lower end side of the mulching baffle plate. As a result, discharging of grass clippings to the rear side of the cutter blade rotational range through the gap between the rear plate portion and the ground surface can be facilitated.
(4) The present invention relates also to a riding grass mower having the grass mower device according to any one of the arrangements set forth in (1).

Further and other advantageous effects achieved thereby will become apparent upon reading the following explanation with reference to the accompanying drawings.

### BRIEF DESCRIPTION OF THE DRAWINGS

Fig. 1 is a left side view showing a riding type grass mower in its entirety according to one embodiment of the invention (applied also to the subsequent drawings up to Fig. 6),
Fig. 2 is a plan view showing a grass mower device in its entirety,
Fig. 3 is a plan view showing a discharge-opening cover under a lowered closing posture, and a stopper member at its stopper position,
Fig. 4 is a plan view showing the stopper member at its stopper releasing position,
Fig. 5 is a rear view showing the discharge-opening cover under the lowered closing posture, and the stopper member at its stopper position,
Fig. 6 is a rear view showing the discharge-opening cover under an elevated opening posture, and the stopper member at its stopper releasing position,
Fig. 7 is a left side view showing a riding type grass mower in its entirety according to another aspect of the disclosure which is not claimed (applied also to the subsequent drawings up to Fig. 12),
Fig. 8 is a plan view of the riding type grass mower,
Fig. 9 is a plan view showing vicinity of a discharge opening of a mower,
Fig. 10 is an exploded perspective view showing the vicinity of the discharge opening of the mower,
Fig. 11 is a side view showing the vicinity of the discharge opening when a guide member is set to a collapsed posture,
Fig. 12 is a side view showing the vicinity of the discharge opening when the guide member is set to a raised posture,
Fig. 13 is a left side view showing a riding type grass mower in its entirety according to yet another aspect of the disclosure which is not claimed (applied also to the subsequent drawings up to Fig. 15),
Fig. 14 is a bottom view of a grass mower device, and
Fig. 15 is a side view in vertical section showing the grass mower device.

### DETAILED DESCRIPTION OF PREFERRED EMBODIMENTS

### [Embodiment]

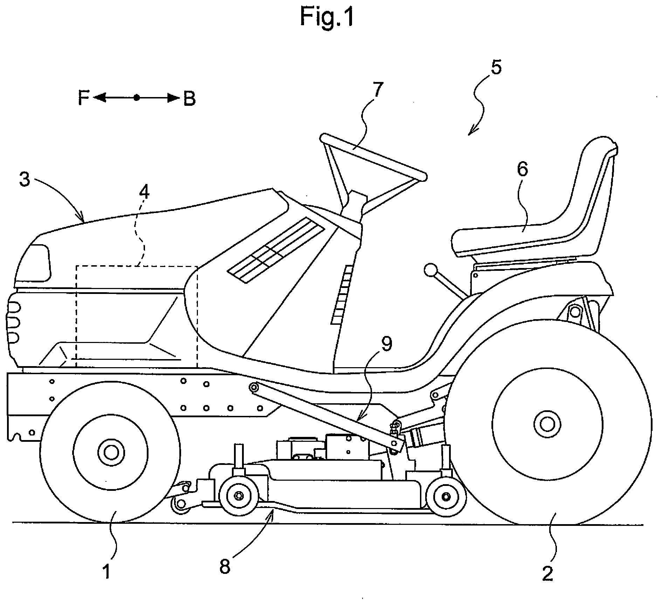

In the instant embodiment, a grass mower device is configured as a riding type grass mower. Fig. 1 is a side view showing the riding type grass mower in its entirety. In Fig. 1, the direction denoted with a mark [F] is defined as a front (forward) direction of a traveling vehicle body, the direction denoted with a mark [B] is defined as a rear direction of the traveling vehicle body, the direction on the near side in the illustration is defined as a left side direction of the traveling vehicle body and the direction on the far side in the illustration is defined as a right side direction of the traveling vehicle body, respectively.

### [General Configuration of Riding Type Grass Mower]

As shown in Fig. 1, the riding type grass mower includes a traveling vehicle body that mounts a pair of right and left front wheels 1 which are steerable and a pair of right and left rear wheels 2 which are drivable. At a front portion of the traveling vehicle body, an engine section 3 is formed and in this engine section 3, an engine 4 is mounted. The traveling vehicle body travels as the rear wheels 2 are driven by power from the engine 4. At a rear portion of the traveling vehicle body, a driving section 5 is formed. In this driving section 5, there are provided a driver's seat 6 and a steering wheel 7. The traveling vehicle body is configured as a riding type in which a driver rides in the driving section 5 and steers the front wheels 1 by a rotational operation of the steering wheel 7.

At a portion of the traveling vehicle body between the front wheels 1 and the rear wheels 2, a grass mower device 8 is provided. This grass mower device 8 is supported by the vehicle body frame via a link mechanism 9. With a lifting up/down operation of the link mechanism 9, the grass mower device 8 can be lifted up/down between a lowered working state and an elevated non-working state. As the traveling vehicle body is caused to travel with setting the grass mower device 8 to the lowered working posture, a grass cutting (mowing) operation is effected by the grass mower device 8.

### [Configuration of Grass Mower Device 8]

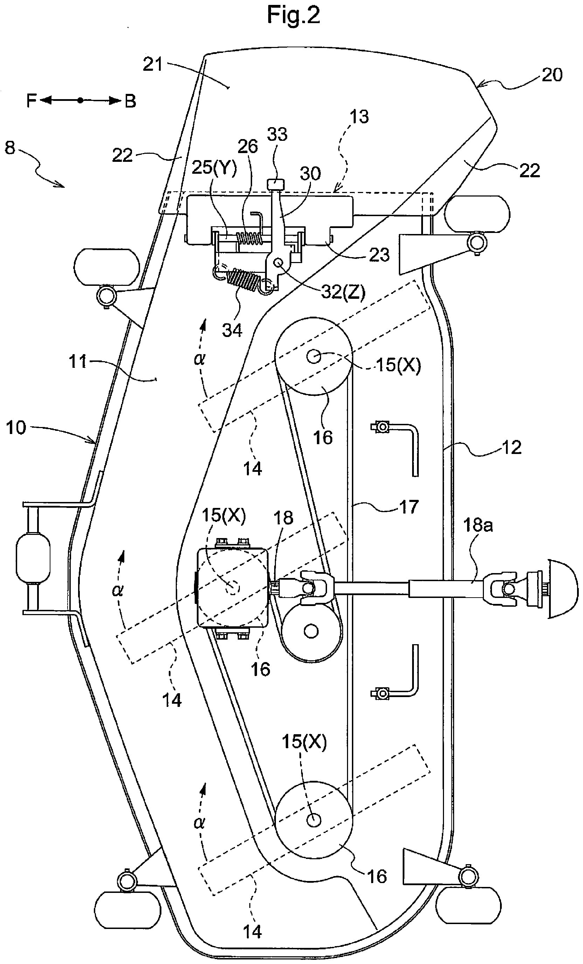

Fig. 2 is a plan view showing the grass mower device 8 in its entirety. As shown in Fig. 2, the grass mower device 8 includes a cutter blade housing 10. The cutter blade housing 10 includes a top plate portion 11, and a side plate portion 12 protruding downwards from an outer circumference of the top plate portion 11. At a right lateral side portion of the cutter blade housing 10 relative to the vehicle body lateral width direction, a discharge opening 13 is formed. Inside the cutter blade housing 10, there are three cutter blades 14 provided side by side along the vehicle body lateral width direction. Each one of the three cutter blades 14 is rotatably supported by the top plate portion 11 via a rotational support shaft 15 extending in the vertical direction of the cutter blade housing 10.

On the upper face side of the top plate portion 11, a cutter blade drive pulley 16 is non-rotatably attached to the upper end portion of each rotational support shaft 15. And, a transmission belt 17 is wound around the three cutter blade drive pulleys 16. To the upper end portion of the center rotational support shaft 15, an input shaft 18 is operably connected via a gear mechanism (not shown).

In operation, when the power of the engine 4 is transmitted to the input shaft 18 via a rotational shaft 18a, the power of the input shaft 18 is transmitted to the three cutter blade drive pulleys 16 via the transmission belt 17, whereby the cutter blades 16 are driven. When the cutter blade drive pulleys 16 are driven, the rotational support shafts 15 are rotatably driven by the cutter blade drive pulleys 16; and the cutter blades 14 are driven to rotate in a rotational direction (α) about the cutter blade housing vertically oriented axis X of the rotational support shafts 15. With rotation of the cutter blades 14, grass located inside the cutter blade housing 10 will be cut (mowed) by the cutter blades 14. The cut grass clippings will be conveyed inside the cutter blade housing 10 toward the discharge opening 13 by a conveying air current generated by the rotation of the cutter blades 14 and then discharged through the discharge opening 13 to the outside of the cutter blade housing 10.

### [Configuration of Discharge Opening Cover 20]

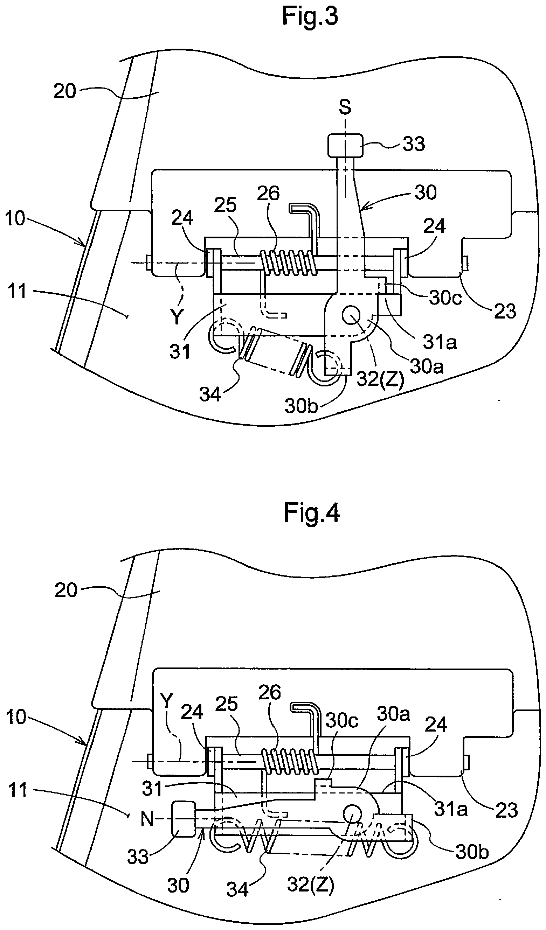

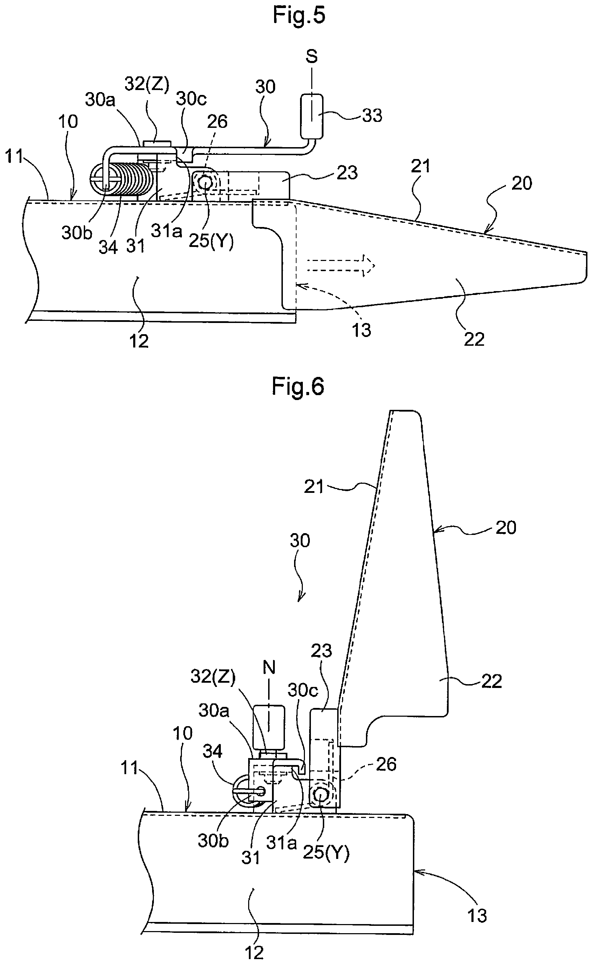

As shown in Fig. 2, to the right lateral side of the cutter blade housing 10, a discharge-opening cover 20 is provided. As shown in Fig. 2 and Fig. 5, the discharge-opening cover 20 includes a cover top plate portion 21, and a pair of cover side plate portions 22. The cover side plate portions 22 extend from front/rear end portions of the cover top plate portion 21 toward the back face side of the cover top plate portion 21. A connecting portion 23 is formed on the upper face side of the base end side of the cover top plate portion 21. As shown in Fig. 3 and Fig. 5, the connecting portion 23 is connected via the support shaft 25 to a pair of support portions 24 of the top plate portion 11 of the cutter blade housing 10.

The discharge-opening cover 20 is supported by the cutter blade housing 10 via the support shaft 25. As the discharge-opening cover 20 is vertically pivoted about an axis Y of the support shaft 25 oriented along the front/rear direction of the cutter blade housing, the attaching posture of the discharge-opening cover 20 can be switched over between an attaching posture as a lowered closing posture (see Fig. 3, Fig. 5) and another attaching posture as an elevated opening posture (see Fig. 6).

As shown in Fig. 3 and Fig. 5, when the discharge-opening cover 20 is set to the lowered closing posture, the discharge-opening cover 20 will extend to the right lateral side from the cutter blade housing 10, whereby the upper side of the discharge opening 13 is covered by the discharge-opening cover 20.

As shown in Fig. 6, when the discharge-opening cover 20 is set to the elevated opening posture, the discharge-opening cover 20 is raised relative to the cutter blade housing 10, and the covering of the discharge opening 13 by the discharge-opening cover 20 is released.

As shown in Fig. 3, on the support shaft 25, a helical spring 26 is fitted. An arm portion on one end side of the helical spring 26 is retained to the top plate portion 11, and an arm portion on the other end side of the helical spring 26 is retained to the connecting portion 23. The discharge-opening cover 20 is urged to the lowered closing posture by the spring 26. In the instant embodiment, the helical spring 26 is used as a cover urging mechanism. Instead, various kinds of elastic members such as a torsion coil spring, a plate spring, a rubber member, etc. can be employed also.

As shown in Fig. 3 and Fig. 5, on the upper face side of the cutter blade housing 10, a stopper member 30 is provided. This stopper member 30 constitutes a lock mechanism for locking the discharge-opening cover 20 under the lowered closing posture. More particularly, the mechanism is configured as follows.

A base portion 30a of the stopper member 30 is supported by a second support portion 31 of the cutter blade housing 10 via a support shaft 32. At a free end portion of the stopper member 30, there is provided a man-operable operating portion 33 acting as an operational portion of the lock mechanism. Between an arm portion 30b of the base portion 30a and the second support portion 31, a torsion spring 34 is connected. The base portion 30a forms a positioning portion 30c. The second support portion 31 forms a positioning fixing portion 31a.

As shown in Fig. 3 and Fig. 4, by a pulling force of the spring 34, the stopper member 30 is pivotally operated about an axis Z of the support shaft 32 which is vertically oriented relative to the cutter blade housing 10, and the positioning portion 30c comes into contact with the positioning fixing portion 31a to be received and supported thereby, whereby the stopper member 30 is set to a stopper position S. The stopper member 30 is urged to this stopper position S by the spring 34.

As shown in Figs. 3 and 5, when the stopper member 30 is operated to the stopper position S, the discharge-opening cover 20 can be locked under the lowered closing posture by the stopper member 30. Namely, when the stopper member 30 is operated to the stopper position S, the free end portion of this stopper member 30 is located upwardly of the connecting portion 23, so that even if the discharge-opening cover 20 is elevated from the lowered closing posture by a stroke that corresponds to the gap between the connecting portion 23 and the stopper member 30, as the connecting portion 23 comes into abutment against the stopper member 30, further elevation of the discharge-opening cover 20 will be prevented by the stopper member 30.

As shown in Figs. 4 and 6, when the man-operable operational portion 33 is pivotally operated about the axis Z against the spring 34, the stopper member 30 can be pivotally operated about the axis Z to a stopper releasing position N.

As shown in Figs. 4 and 6, when the stopper member 30 is set to the stopper releasing position N, locking of the discharge-opening cover 20 by the stopper member 30 is released. More particularly, when the stopper member 30 is set to the stopper releasing position N, this stopper member 30 is located at a position away from the connecting portion 23. So that, even if the discharge-opening cover 20 is elevated from the lowered closing posture, the discharge-opening cover 20 will not come into abutment against the stopper member 30. When the stopper member 30 is set to the stopper releasing position N, the discharge-opening cover 20 can be pivotally elevated against the spring 26, and the discharge opening 20 can be changed in its posture from the lowered closing posture to the elevated opening posture.

As shown in Figs. 3 and 5, normally, the discharge-opening cover 20 is locked to the lowered closing posture by the stopper member 30, thus inhibiting inadvertent switchover of the discharge-opening cover 20 to the elevated opening posture due to vibration or the like. Thus, scattering of cut grass clippings near the outer side of the discharge opening 13 is prevented by the discharge-opening cover 20. Further, scattering or soaring of stone, earth or the like from the inside of the cutter blade housing 10 to the outside through the discharge opening 13 is prevented by the discharge-opening cover 20. Moreover, entrance of an object outside the cutter blade housing 10 into this housing 10 through the discharge opening 13 is also prevented by the discharge-opening cover 20.

As shown in Fig. 6, when the coverage of the discharge opening 13 by the discharge-opening cover 20 is to be released, the man-operable operational portion 33 will be operated to switch the stopper member 30 to the stopper releasing position N, thus releasing the closing lock of the discharge cover 20 by the stopper member 30. Then, with maintaining this lock releasing, the discharge-opening cover 20 will be elevated against the force of the spring 26, thus switching the discharge cover 20 to the elevated opening posture.

Upon releasing the operation of maintaining the discharge-opening cover 20 under the elevated opening posture, the discharge opening 20 will be returned to the lowered closing posture by the spring 26, without requiring any special operation for closing this discharge opening 20. In association with the switchover of the discharge-opening cover 20 to the lowered closing posture, the stopper member 30 is switched to the stopper position S by the spring 34. Thus, without requiring any special operation for maintaining the discharge-opening cover 20 under the lowered closing posture, the discharge-opening cover 20 can be maintained under the lowered closing posture in a firm and reliable manner by means of the stopper member 30 which is now switched to the stopper position S.

### [Modified Embodiments of the above Embodiment]

Next, modified embodiments will be described only in the respect of differences from the foregoing embodiment.
(1) In the foregoing embodiment, the stopper member 30 is employed as the lock mechanism for locking the discharge-opening cover 20 under the lowered closing posture. Instead, it is also possible to employ e.g. a brake for locking the discharge-opening cover 20 under the lowered closing posture by applying a baking force to the support shaft 25 through friction or meshing engagement therewith.
(2) In the foregoing embodiment, the man-operable operational portion 33 is employed to act as the operational portion of the lock mechanism. Instead, it is also possible to employ an operational portion which is operably connected to the lock mechanism via a coupling mechanism such as an operational cable.
(3) In the foregoing embodiment, the coil spring 34 providing a tensile force as its urging force is employed to act as the lock urging mechanism. Instead, it is also possible to employ a spring which provides a compression force as its urging force. Further, a various elastic members such as a helical spring, a plate spring, a rubber member, etc. too can be employed.
(4) In the foregoing embodiment, the discharge opening 13 is formed at a right lateral side portion of the cutter blade housing 10. Instead, it may be formed at a left lateral side thereof.
(5) In the foregoing embodiment, three cutter blades 14 are provided. Instead, other number than three of cutter blades, such as two or four, may be employed.
(6) In the foregoing embodiment, the grass mower device is mounted between the front wheels and the rear wheels. The invention is not limited thereto, but may be applied to a grass mower device which is mounted forwardly of the front wheels.

### [Second Example]

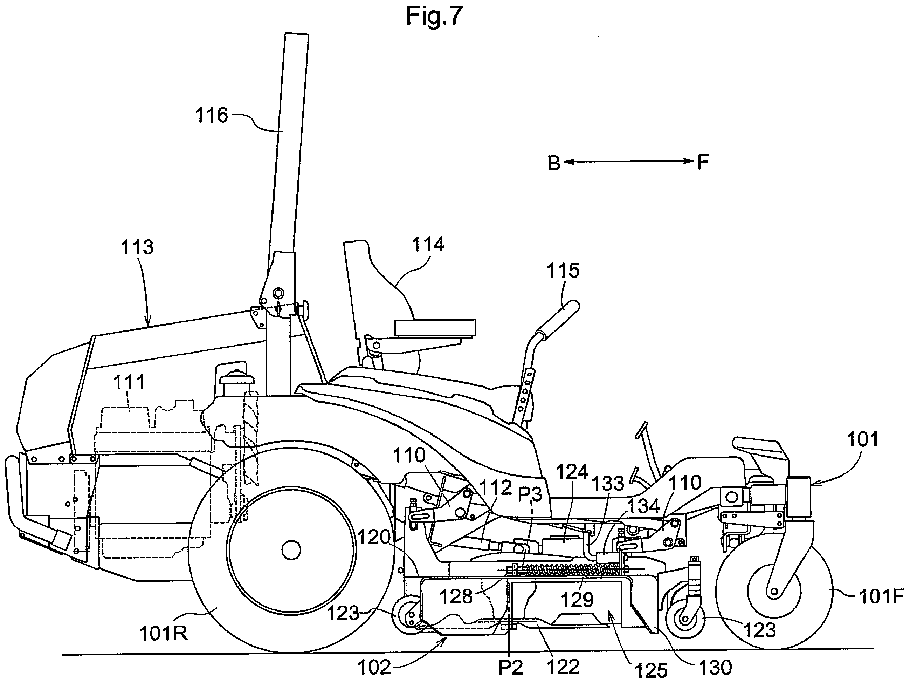

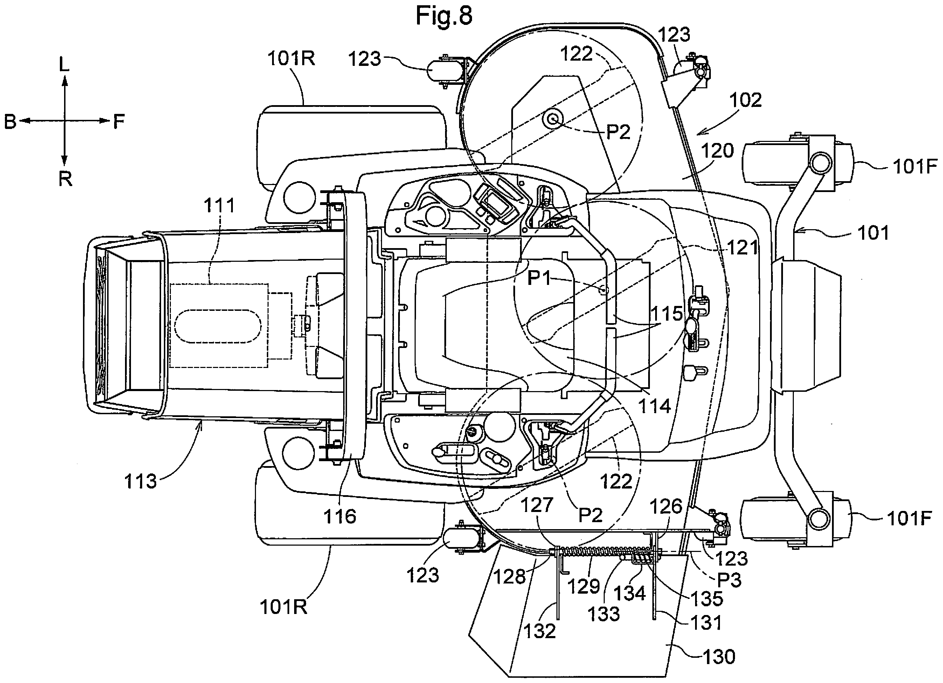

In the instant example, a traveling direction on the forward side (see an arrow F in Fig. 7 and Fig. 8) at the time of working traveling of a riding type grass mower is the "front" side, a traveling direction on the rear (reverse) side (see an arrow B in Fig. 7 and Fig. 8) is the "rear" side, a direction corresponding to the right side of the traveling vehicle body relative to its forwardly oriented posture in the front/rear direction (see an arrow R in Fig. 8) is the "right" side, and similarly, a direction corresponding to the left side thereof (see an arrow L in Fig. 8) is the "left" side, respectively.

### [General Configuration of Riding Type Grass Mower]

A general configuration of a riding type grass mower will be described with reference to Fig. 7 and Fig. 8.

As shown in Fig. 7, the riding type grass mower, a traveling vehicle body 101 has front wheels 101F that are steered, and rear wheels 101R that are driven but not steerable. A mower 102 is supported in suspension on an underside of the traveling vehicle body 101 via a link mechanism 110 to be liftable up/down parallel therewith.

An engine 111 is mounted at a rear portion of the traveling vehicle body 101. Power taken from a output shaft (not shown) protruding forwardly from the engine 111 is transmitted to a transmission case (not shown) mounting the rear wheels 101R; and power resulting from the transmission case is transmitted to the mower 102 via a transmission shaft 112 extending from the transmission case.

At a rear portion of the traveling vehicle body 101, there is mounted an engine section 113 accommodating the engine 111. And, at a vehicle body center portion forwardly of the engine section 113, a driver's seat 114 is provided. At positions forwardly of the driver's seat 114, there are provided a pair of right and left maneuvering operational rods 115 for steering; and at a position midway between the driver's seat 114 and the engine section 113, a ROPS (rollover protection structure) 116 is provided.

The mower 102 is disposed at a position overlapped with the driver's seat 114 in the front/rear direction (i.e. as seen from a lateral side of the traveling vehicle body 101) and downwardly of the traveling vehicle body 101.

### [General Configuration of Mower]

As shown in Fig. 7 and Fig. 8, the mower 102 includes three rotary blades 121, 122 supported on three rotational shafts (not shown) that are vertically extending through a mower deck 120 and rotatably driven about vertically oriented rotational axes PI, P2, P3 (corresponding to "vertically oriented axes").

The three rotary blades 121, 122 are disposed side by side in the right/left direction.

The respective rotary blades 121, 122 attached to lower end portions of the rotational shafts are formed of steel plates in the form of band plates. At one of opposed ends of each rotary blade 121,122, a cutter blade (not shown) is formed and at the other side of the opposed ends thereof, a wind generation wing (not shown) is formed integrally.

Adjacent right and left ends of the mower deck 120 and on the front and rear sides, gauge wheels 123 are attached. With these gauge wheels 123, a ground height of each rotational blade 121, 122 is adjustable.

At a right/left center portion on the upper face of the mower deck 120, a PTO (power take-off) box 124 is provided. Power from the engine 111 is transmitted to the PTO box 124 via the transmission shaft 112.

Inside the PTO box 124, there is provided a mechanism for converting rotational power transmitted from the front/rear oriented transmission shaft 112 to rotation of an unillustrated implement output shaft which is oriented vertically. And, rotation of the implement output pulley is transmitted via a transmission belt (not shown) to transmission pulleys (not shown) attached to upper end portions of the rotational shafts of the respective rotary blades 121, 122.

The mower 102 is arranged such that the rotational axis P1 of the rotatory blade 121 disposed at the vehicle body center side as seen in a plan view is positioned forwardly of the rotational axis P2 of the rotary blade 122 which is located on the lateral outer side in the right/left direction.

In this way, the respective rotary blades 121, 122 are arranged such that the positions of the rotational axes PI, P2 thereof are not aligned on a single straight line in the right/left direction, but slightly offset from each other in the front/rear direction. With this arrangement of slightly offsetting the positions of the rotational axes PI, P2 of the respective rotary blades 121, 122 in the front/rear direction, it is possible to avoid mutual interference between leading-end rotational paths of the respective rotary blades 121, 122 and to cause the passage paths of these leading-end rotational paths to be slight overlapped with each other in the right/left direction.

Namely, when the positions of the rotational axes PI, P2 of the respective rotary blades 121, 122 are offset in the front/rear direction as described above, even if the distance between the rotational axes PI, P2 of the respective rotary blades 121, 122 in the right/left direction is made slightly shorter, it is still possible to dispose the respective rotary blades 121, 122 without overlap between the respective leading-end rotary paths thereof. Thus, the passage paths of the leading-end rotational paths can be slightly overlapped with each other, while avoiding overlap between the leading-end rotational paths of the respective rotary blades 121, 122.

With the above-described arrangement of slightly overlapping of the passage paths of the leading-end rotational paths of the respective rotary blades 121, 122, it is possible to avoid occurrence of cutting failure between the adjacent rotary blades 121, 122.

As shown in Fig. 8, at the right end portion of the mower deck 120, there is provided a discharge opening 125 for discharging grass clippings cut by the respective rotary blades 121, 122. On the lateral outer side of this discharge opening 125, there is provided a guide member 130 which is vertically pivotable about an axis P3 oriented in the front/rear direction.

In a side discharge mode in which the cut grass clippings are discharged to the vehicle body right rear side of the mower deck 120, when the guide member 130 is collapsed downwards to extend to the lateral outer side of the discharge opening 125 and the vehicle is caused to travel with rotation of the rotary blades 121, 122, the grass clippings cut inside the mower deck 120 can be discharged to the right obliquely rear side of the mower deck 120.

### [Configuration of Guide Member]

Details of the configuration of the guide member 130 will be described next.

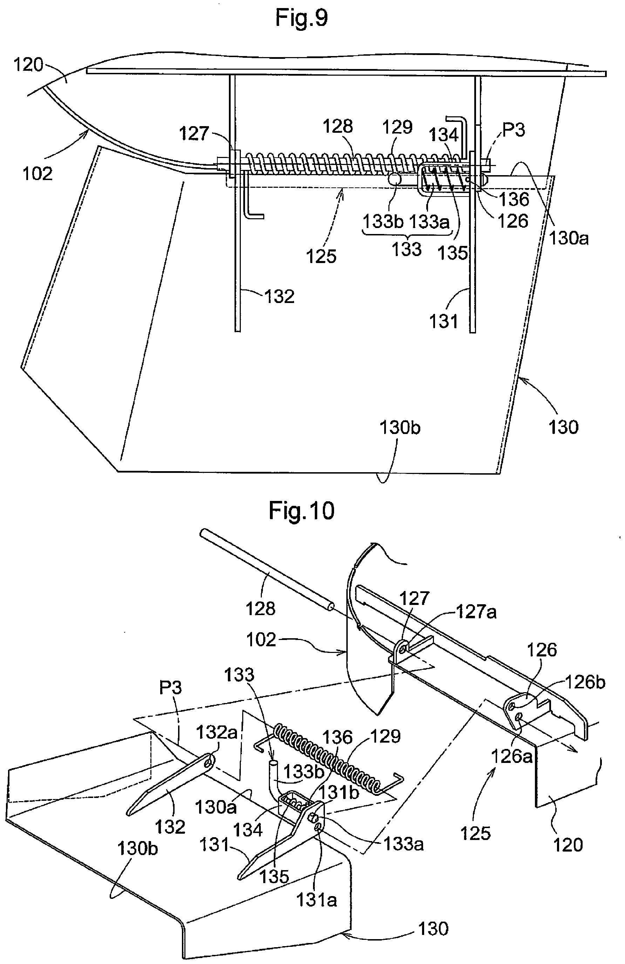

As shown in Figs. 9 through 12, the guide member 130 is configured to be posture-switchable between a raised posture wherein it is upwardly pivoted about the front/rear oriented axis P3, and a collapsed posture wherein it is downwardly pivoted about the front/rear oriented axis P3 to be collapsed to extend along the traveling ground surface.

When the above-described guide member 130 is set to the raised posture, a maintenance operation or the like can be readily carried out around the discharge opening 125. When the guide member 130 is set to the collapsed posture, grass clippings can be guided and discharged in a predetermined direction while avoiding excessive scattering of the grass clippings over a more than necessary wide area in the side discharge mode.

As shown in Fig. 7 and Fig. 10, by bending a flat plate according to an opening shape of the discharge opening 125 of the mower deck 120, the guide member 130 is formed in a channel-like shape with its lower side being open as seen in its side view.

Referring to the shape of this guide member 130 as seen in its plan view, as shown in Figs. 8-10, its plan shape in the collapsed posture extends progressively wider from an inner side connecting portion 130a toward an outer side discharging portion 130b, thus allowing discharge of clipping grass at a wide angle with a predetermined range.

On the upper face of the guide member 130, a pair of front and rear connecting arms 131, 132 are fixed by welding.

The front side connecting arm 131 and the rear side connecting arm 132 extend toward the mower deck 120 relative to a side edge of the guide member 130 adjacent the inner side connecting portion 130a; and connecting holes 131a, 132a are formed at the respective extension portions of the front side connecting arm 131 and the rear side connecting arm 132.

On the mower deck 120 too, there are provided a pair of front and rear attaching brackets 126, 127 attached erect thereto; and the pair of front and rear attaching brackets 126, 127 define attaching holes 126a, 127a. As a connecting rod 128 is inserted into the attaching holes 126a, 127a defined in the front and rear attaching brackets 126, 127 and the connecting holes 131a, 132a defined in the front and rear connecting arms 131, 132, the guide member 130 is mounted on the mower deck 120 to be vertically pivotable relative thereto about the axis P3 of the connecting rod 128. Namely, the axis P3 of the connecting rod 128 functions as an axis for pivoting the guide member 130 about the front/rear oriented axis P3.

Between the front and rear connecting arms 131, 132 and around the outer circumference of the connecting rod 128, a torsion spring 129 (corresponding to an "urging mechanism") is fitted. One end of the torsion spring 129 is placed in contact with the mower deck 120, and the other end thereof is placed in contact with the guide member 130. Under the urging force of this torsion spring 129, the guide member 130 is constantly urged downwards. With this urging function and a locking function of a lock mechanism to be described later, vertical displacement of the guide member 130 in association with e.g. traveling of the riding type grass mower is suppressed.

Of the pair of front and rear attaching brackets 126, 127 provided on the mower deck 120 side, the front side attaching bracket 126 (corresponding to a "retained member") defines an engaging hole 126b other than the attaching hole 126a.

To the front side connecting arm 131 connected to the front side attaching bracket 126, there is fitted a stopper pin 133 (corresponding to a "retaining member") which can be inserted into and withdrawn from the engaging hole 126b.

Namely, as shown in Figs. 9 through 12, on a rear face side of the front side connecting arm 131 of the guide member 130 set to the collapsed posture, there is provided a channel-like guide frame 134 whose one side opposed to the front side connecting arm 131 as seen in the plan view is opened.

Into the guide frame 134, an L-shaped stopper pin 133 is inserted from the rear side thereof, the stopper pin 133 having a horizontally oriented slide shaft portion 133a extending along the top face, and a raised shaft portion 133b bent in the direction intersecting the slide shaft portion 133a.

In the stopper pin 133, on a portion of its slide shaft portion 133a inserted into the guide frame 134, there is fitted a coil shaped retention urging spring 135 mounted inside the guide frame 134. The stopper pin 133 includes a spring receiving pin 136 extending through the slide shaft portion 133a; and the retention urging spring 135 is fitted as being clamped between the spring receiving pin 136 and the inner face of the guide frame 134.

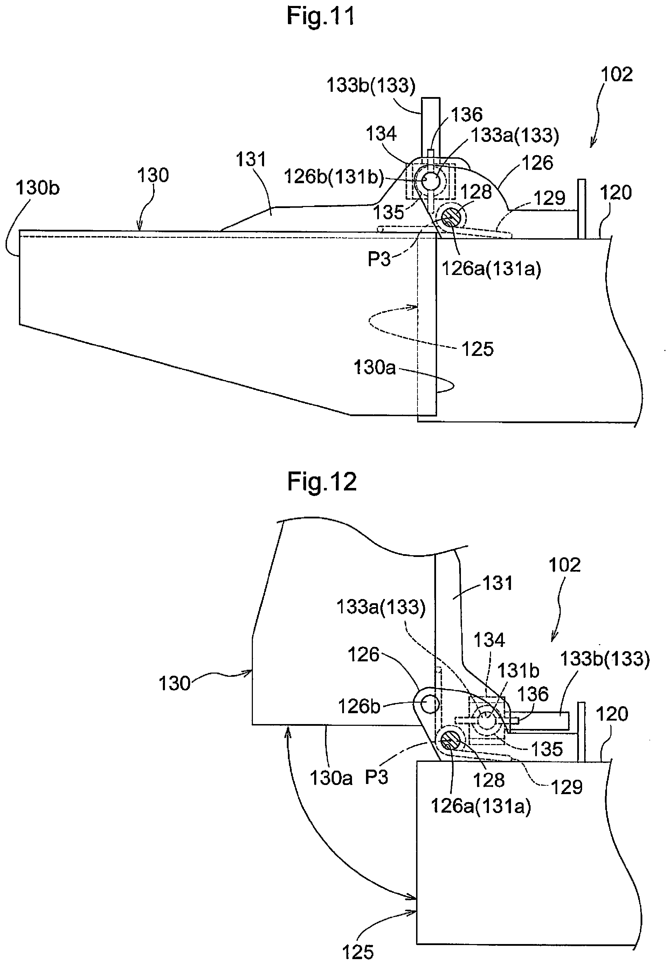

The front side connecting arm 131 defines a through hole 131b into which a shaft end of the slide shaft portion 133a of the stopper pin 133 is fitted. The through hole 131b is located at a position offset from the engaging hole 126 of the attaching bracket 126 when the guide member 130 is operated to the raised posture as shown in Fig. 12; and the through hole 131b is located at a position in agreement with the engaging hole 126b when the guide member 130 is operated to the collapsed posture as shown in Fig. 11.

Accordingly, when the guide member 130 is operated to the collapsed posture, due to the function of the retention urging spring 135, the slide shaft portion 133a will extend through the through hole 131b of the connecting arm 131 and the engaging hole 126b of the attaching bracket 126, thus being located under the collapsed posture as shown in Fig. 11.

Namely, the above-described stopper pin 133, the attaching bracket 126 having the engaging hole 126b and the retention urging spring 135 together constitute the lock mechanism for locking the guide member 130 in position under the collapsed posture.

For unlocking the guide member 130, the end portion of the slide shaft portion 133a will be withdrawn from the engaging hole 126b of the attaching bracket 126, while gripping the raised shaft portion 133b of the stopper pin 133. When the end portion of the slide shaft portion 133a has been withdrawn from the engaging hole 126b, if the guide member 130 is posture-switched to the raised posture as shown in Fig. 12, the end portion of the slide shaft portion 133a of the stopper pin 130 will be pressed against the attaching bracket 126 by the function of the retention urging spring 135 at the position offset from the engaging hole 126b.

However, compared with frictional resistance due to the contact between the stopper pin 133 urged toward the engaging side by the retention urging spring 135 and the attaching bracket 126, a return urging force of the torsion spring 129 for urging the guide member 130 from the raised posture to the collapsed posture is set greater. Therefore, if the state of being supported under the raised posture is released by removing the hand from the guide member 130, the guide member 130 will be automatically returned to the collapsed posture side, under the own weight of the guide member 130 and the return urging force of the torsion spring 129. Upon reaching the collapsed state, due to the function of the retention urging spring 135, the slide shaft portion 133a will extend through the through hole 131b of the connecting arm 131 and the engaging hole 126b of the attaching bracket 126, whereby the guide member 130 is locked under the collapsed posture.

### [Modified Examples of Second Example]

Next, modified examples will be described only in the respect of differences from the foregoing example.
(1) In the foregoing example, the torsion spring 129 is provided as the urging mechanism for elastically urging the guide member 130 toward the collapsed posture side. However, the invention is not limited thereto.
   For instance, though not shown, it is possible to employ an arrangement in which a pull spring or a compression spring may be used for urging the guide member 130 toward the collapsed posture side.
(2) In the foregoing example, the attaching bracket 126 having the engaging hole 126b corresponding to the retained member is provided in the mower deck 120 and the stopper pin 133 corresponding to the retaining portion is provided on the side of the guide member 130. However, the invention is not limited thereto.
   For instance, it is possible to employ a arrangement wherein the attaching bracket 126 having the engaging hole 126b corresponding to the retained member is provided on the guide member 130 side and the stopper pin 133 corresponding to the retaining member is provided in the mower deck 120.
(3) In the foregoing example, the arrangement incorporating the retention urging spring 135 is used as the lock mechanism. However, the invention is not limited thereto.
   For instance, it is possible to omit the retention urging spring 135, and instead there may be provided an attaching bracket 126 having the stopper pin 133 corresponding to the retaining member, and the engaging hole 126b corresponding to the retained member.
   In this arrangement, the guide member 130 will be automatically returned to the collapsed posture side under its own weight and the return urging force of the torsion spring 129. But, the locking state will not be realized automatically, due to absence of the retention urging spring 135. Therefore, if locking is needed, the stopper pin 133 may be manually inserted into the engaging hole 126b, thus realizing the locked state.
(4) In the foregoing example, the mower was configured as a riding type grass mower (so-called a zero-turn mower) mounting a mower on the underside thereof between the front wheels 101F and the rear wheels 101R. However, the invention is not limited to such a riding type grass mower. The invention may be similarly applied to a riding type grass mower having the mower 102 connected forwardly of the front wheels 101F (so-called a front mower (not shown)). Further, the invention is not limited to such a riding type grass mower, but is applicable also to a walk-behind type mower 102.

### [Third Example]

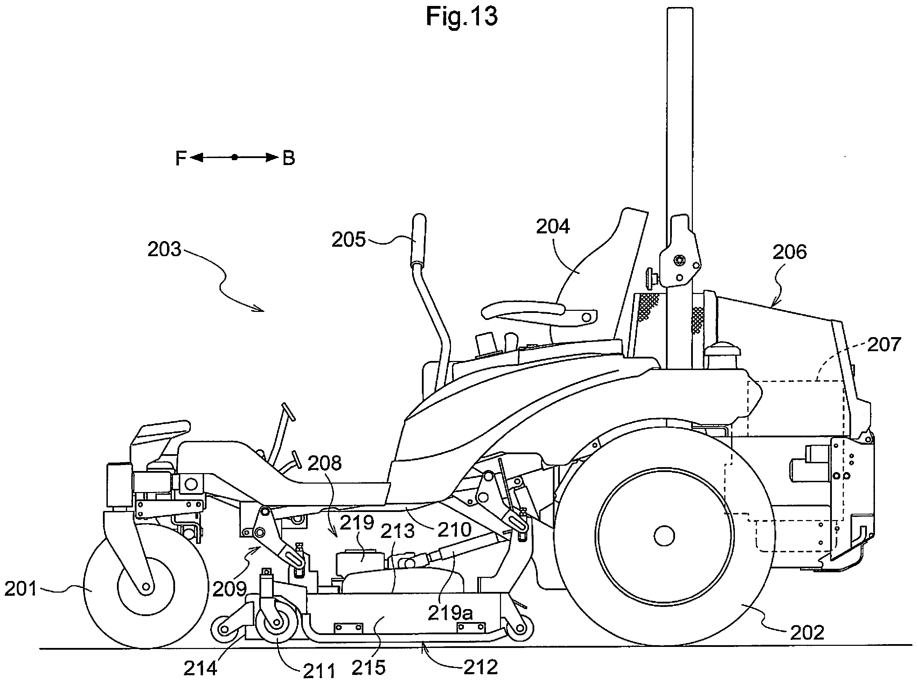

In the instant example, Fig. 13 is a side side view showing a riding type grass mower in its entirety. In Fig. 13, the direction denoted with mark [F] is defined as the front direction of the traveling vehicle body, the direction denoted with mark [B] is defined as the rear direction of the traveling vehicle body, the near side in the illustration is defined as the left direction of the traveling vehicle body and the far side in the illustration is defined as the right direction of the traveling vehicle body, respectively.

### [General Configuration of Riding Type Grass Mower]

As shown in Fig. 13, the riding type grass mower includes a traveling vehicle body that mounts a pair of right and left front wheels 201 which are freely rotatable and a pair of right and left rear wheels 202 which are drivable. The pair of right and left front wheels 201 are comprised of caster type wheels. The pair of right and left rear wheels 202 are driven by power transmitted separately from a pair of hydrostatic stepless speed changers (not shown). At a front portion of the traveling vehicle body, a driving section 203 is provided. At this driving section 203, there are provided a driver's seat 204 and a pair of right and left maneuvering levers 205. At a rear portion of the traveling vehicle body, an engine section 206 is provided. In the engine section 206, there is provided an engine 207 which outputs power to the stepless speed changer devices, etc. Between the front and rear wheels of the traveling vehicle body, a grass mower device 208 is provided. The grass mower device 208 is supported by a vehicle body frame 210 via a link mechanism 209. In association with a lift up/down operation of the link mechanism 209, the grass mower device 208 is lifted up/down between a lowered working state in which gauge wheels 211 are placed in contact with the ground surface and an elevated non-working state in which the gauge wheels 211 are lifted up off the ground surface.

With the above-described riding type grass mower, by pivotally operating the pair of right and left maneuvering levers 205, the pair of stepless speed changer devices can be independently operated for speed change, whereby a driving speed and a driving direction each of the right and left rear wheels 202 are changed independently of each other, whereby the traveling vehicle body can be steered. When the traveling vehicle body is caused to travel with setting the grass mower device 208 to the lowered working state, lawn, grass, etc. can be cut (mowed) by the grass mower device 208.

### [Configuration of Grass Mower Device 208]

As shown in Fig. 13, Fig. 14 and Fig. 15, the grass mower device 208 includes a cutter blade housing 212. The cutter blade housing 212 includes a top plate portion 213, a front wall portion 214 extending downwards from the front edge portion of the top plate portion 213, and a pair of right and left side wall portions 215 extending downwards from right and left edges of the top plate portion 213.

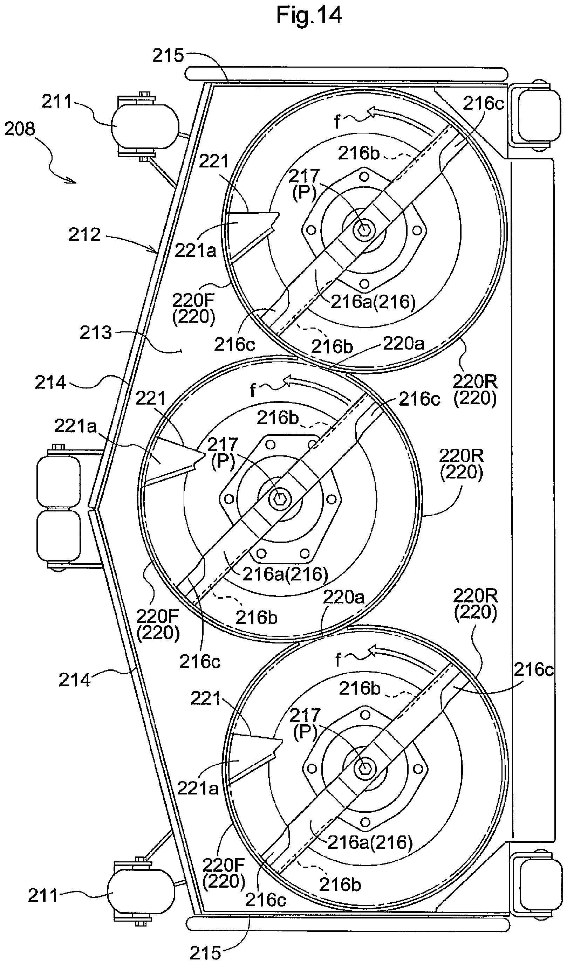

Inside the cutter blade housing 212, there are provided three cutter blades 216 which are disposed side by side in the lateral width direction. Each cutter blade 216 is supported by the top plate portion 213 via a rotational support shaft 217 and is rotatable about the axis of the rotational support shaft 217 as a rotational axis P. The rotational support shafts 217 are covered by a cover 218. The axis each of the rotational support shafts 217 extends in a direction along the vertical direction of the cutter blade housing 212. On the upper side of the top plate portion 213, a drive section 219 is provided. Power from the engine 207 is inputted via a rotational shaft 219a (see Fig. 13) to the drive section 219. And, the inputted power drives the rotational support shafts 217, whereby the cutter blades 216 are driven in a rotational direction (f) (see Fig. 14).

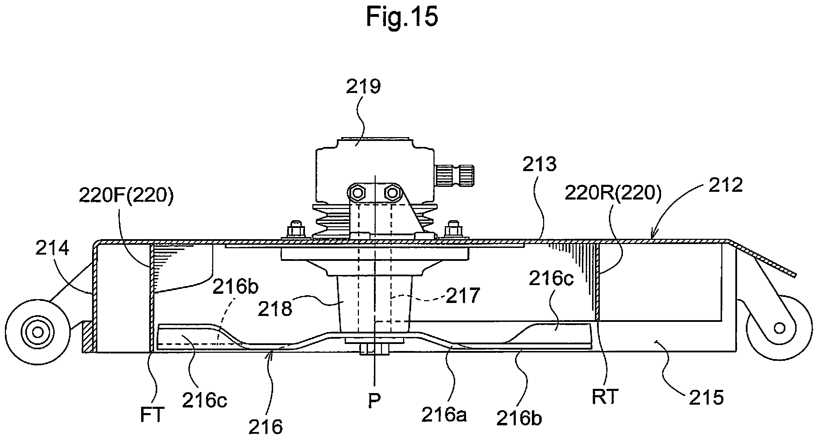

As shown in Fig. 14 and Fig. 15, each one of the three cutter blades 216 includes a cutter blade portion 216a whose intermediate portion in the longitudinal direction is supported on the rotational support shaft 217. At opposed leading ends of the cutter blade portion 216a, there are provided an edge 216b and a wind generation portion 216c. The wind generation portion 216c is raised from the leading end portion of the cutter blade portion 216a toward the upper side of the cutter blade portion 216a. When the cutter blade 216 is driven, the wind generation portion 216c is rotated together with the cutter blade portion 216a, so that the wind generation portion 216c generates a conveying air current or wind.

As shown in Fig. 14 and Fig. 15, inside the cutter blade housing 212, there are provided three mulching baffle plates 220. The mulching baffle plates 220 are arranged so as to surround the respective rotational ranges of the three cutter blades 216, as seen along the vertical direction of the cutter blade housing 212. Each mulching baffle plate 220 extends downwards from the top plate portion 213 and is supported by the top plate portion 213. Of the mulching baffle plates 220 adjacent each other, at a portion where one mulching baffle plate 220 intersects the other mulching baffle plate 220, a plate portion 220a of the one mulching baffle plate 220 constitutes a plate portion of the other mulching baffle plate 220.

As shown in Fig. 14, in the mulching baffle plate 220, a rear plate portion 220R which is located more rearwardly of the cutter blade housing 212 than the rotational center P of the cutter blade 216 is configured such that a lower end RT of the rear plate portion 220R is disposed higher than the wind generation portion 216c of the cutter blade portion 216. Thus, when the grass mower device 208 is lowered to the lowered working state, a wide gap is formed between the rear plate portion 220R and the ground surface.

As shown in Fig. 14, in the mulching baffle plate 220, a front plate portion 220F which is located more forwardly of the cutter blade housing 212 than the rotational center P of the cutter blade 216 is configured such that a lower end FT of the front plate portion 220F is disposed lower than the cutter blade portion 216a of the cutter blade portion 216. Thus, when the grass mower device 208 is lowered to the lowered working state, the gap between the front plate portion 220F and the ground surface becomes smaller.

As shown in Fig. 14, in the rotational range of the cutter blade 216, at a position located more forwardly of the cutter blade housing 212 than the rotational center P of the cutter blade 216, a guide member 221 is provided. The guide member 221 is supported by the mulching baffle plate 220. The guide member 221 includes an inclined guide face 221a which is progressively disposed on more downstream side in the cutter blade rotational direction as extending toward its lower end. In operation, grass clippings which are caused to flow in rotation inside the mulching baffle plate 220 under the function of the conveying air current generated by the wind generation section 216c will come into contact with the inclined guide face 221a of the guide member 221, thus being guided by the inclined guide face 221a to flow downwards inside the mulching baffle plate 220.

With the grass mower device 208 in operation, during a grass cutting operation, the grass clippings cut by the cutter blade 216, as receiving the conveying air current generated by the wind generation section 216c, will flow in rotation inside the mulching baffle plate 220 and then will stay inside this mulching baffle plate 220 to be shredded by the cutter blade 216. During the operation, the arrangement of making the gap between the front plate portion 220F and the ground surface narrow (relatively smaller) serves to allow the shredding operation of the cut glass clippings to proceed, while effectively preventing inadvertent escape of the grass clippings flowing inside the mulching baffle plate 220 to the front side of the rotational range of the cutter blade 216. The cut grass clippings flowing inside the mulching baffle plate 220 will be guided to flow downwards by the guide member 221 toward the gap between the rear plate portion 220R and the ground surface; and the grass clippings escape to the rear side of the rotational range of the cutter blade 216 through the wide gap between the rear plate portion 220R and the ground surface. Thus, the shredding operation of the cut grass clippings is allowed to proceed, while effectively preventing staying of a large amount of cut grass clippings inside the mulching baffle plate 220.

### [Modified Examples of Third Example]

Next, modified examples will be described only in the respect of differences from the foregoing example.
(1) In the foregoing example, the lower end RT of the rear plate portion 220R of the mulching baffle plate 220 is disposed higher than the wind generation portion 216a of the cutter blade 216. Instead, it is possible to arrange such that the lower end RT is disposed higher than the cutter blade portion 216a and lower than the wind generation portion 216a in the cutter blade 216.
(2) In the foregoing example, the lower end FT of the front plate portion 220F of the mulching baffle plate 220 is disposed lower than the cutter blade portion 216a of the cutter blade 216. Instead, it is possible to arrange such that the lower end FT is disposed lower than the wind generation portion 216c of the cutter blade 216 and higher than the cutter blade portion 216a in the cutter blade 216.
(3) In the foregoing example, there was shown an example in which the guide member 221 is provided. However, it is possible to embody the invention without such a guide member 221.
(4) In the foregoing example, three cutter blades 216 are provided. Instead, it is also possible to embody the invention with two or fewer cutter blades, or four or more cutter blades.

## Claims

1. A grass mower device (8) comprising:
a cutter blade housing (10);
a cutter blade (14) mounted inside the cutter blade housing (10) to be rotatable about a vertically oriented axis (X), a discharge opening (13) being formed at a lateral outer side of the cutter blade housing (10) for discharging grass clippings produced by the cutter blade to the outside of the cutter blade housing (10); and
a discharge-opening cover (20) pivotable between a lowered closing posture for covering an upper side of the discharge opening (13) and an elevated opening posture for uncovering the discharge opening (13);
a cover urging mechanism (26) connected to the cutter blade housing (10) and the discharge-opening cover (20) for urging the discharge-opening cover (20) to the closing posture;
a lock mechanism (30) switchable between a locking state for holding the discharge-opening cover (20) under the closing posture and a lock releasing posture for allowing switchover of the discharge-opening cover (20) to the opening posture;
a lock urging mechanism (34) connected to the cutter blade housing (10) and the lock mechanism (30) for urging the lock mechanism (30) to the locking state, the lock urging mechanism (34) being configured to apply an urging force to the lock mechanism (30) in response to switchover of the discharge-opening cover (20) to the closing posture; and
an operational portion (33) for switching the lock mechanism (30) to the lock releasing posture against the urging force of the lock urging mechanism (34); **characterized in that** the lock mechanism (30) comprises a stopper member pivotally operated about a vertically-oriented support shaft (32) of the cutter blade housing (10); and
the stopper member is displaceable between a stopper position for coming into contact with the discharge-opening cover (20) to inhibit elevation of the discharge-opening cover from the closing posture, and a stopper releasing position for releasing the contact.

2. The grass mower device (8) according to claim 1, wherein:
the cover urging mechanism (26) comprises a spring having one end thereof retained to a top plate portion (11) of the cutter blade housing (10), and the other end thereof retained to a connecting portion (23) between the cutter blade housing (10) and the discharge-opening cover (20); and
wherein the spring of the cover urging mechanism (26) is one of a helical spring, a torsion coil spring, or a plate spring.

3. The grass mower device (8) according to claim 1 or 2, wherein:
the lock urging mechanism (34) comprises a spring having one end thereof connected to the stopper member and the other end connected to the cutter blade housing (10); and
wherein the spring of the lock urging mechanism (34) is one of a coil spring, a helical spring, or a plate spring.

4. The grass mower device (8) according to any of claims 1-3, wherein the operational portion (33) comprises a man-operational portion provided in the stopper member.

5. A riding type grass mower having the grass mower device (8) according to any of claims 1-4.

## Patentansprüche

1. Rasenmähervorrichtung (8), umfassend:
ein Schneidmessergehäuse (10),
ein Schneidmesser (14), das im Inneren des Schneidmessergehäuses (10) montiert ist, um um eine vertikal ausgerichtete Achse (X) drehbar zu sein, wobei an einer seitlichen Außenseite des Schneidmessergehäuses (10) eine Auslassöffnung (13) zum Auslassen von von dem Schneidmesser erzeugtem Rasenschnitt zu der Außenseite des Schneidmessergehäuses (10) gebildet ist, und
eine Auslassöffnungsabdeckung (20), die zwischen einer abgesenkten Schließstellung zum Abdecken einer Oberseite der Auslassöffnung (13) und einer angehobenen Öffnungsstellung zum Freilegen der Auslassöffnung (13) schwenkbar ist,
einen Abdeckungsantriebsmechanismus (26), der mit dem Schneidmessergehäuse (10) und der Auslassöffnungsabdeckung (20) zum Antreiben der Auslassöffnungsabdeckung (20) in die Schließstellung verbunden ist,
einen Verriegelungsmechanismus (30), der zwischen einem Verriegelungszustand zum Halten der Auslassöffnungsabdeckung (20) unter der Schließstellung und einer Entriegelungsstellung zum Ermöglichen einer Umstellung der Auslassöffnungsabdeckung (20) in die Öffnungsstellung umschaltbar ist,
einen Verriegelungsantriebsmechanismus (34), der mit dem Schneidmessergehäuse (10) und dem Verriegelungsmechanismus (30) zum Antreiben des Verriegelungsmechanismus (30) in den Verriegelungszustand verbunden ist, wobei der Verriegelungsantriebsmechanismus (34) dazu ausgestaltet ist, eine Antriebskraft auf den Verriegelungsmechanismus (30) als Reaktion auf eine Umstellung der Auslassöffnungsabdeckung (20) in die Schließstellung aufzubringen, und
eine Betriebssektion (33) zum Umschalten des Verriegelungsmechanismus (30) in die Entriegelungsstellung gegen die Antriebskraft des Verriegelungsantriebsmechnismus (34),
**dadurch gekennzeichnet, dass**
der Verriegelungsmechanismus (30) ein Anschlagelement umfasst, das schwenkbar um eine vertikal ausgerichtete Stützwelle (32) des Schneidmessergehäuses (10) betrieben wird, und
das Anschlagelement zwischen einer Anschlagposition zum In-Kontakt-Kommen mit der Auslassöffnungsabdeckung (20), um ein Anheben der Auslassöffnungsabdeckung von der Schließstellung zu verhindern, und einer Anschlagfreigabeposition zum Freigeben des Kontakts verschiebbar ist.

2. Rasenmähervorrichtung (8) nach Anspruch 1, wobei:
der Abdeckungsantriebsmechanismus (26) eine Feder umfasst, wobei ein Ende davon an einer oberen Plattensektion (11) des Schneidmessergehäuses (10) festgehalten wird und das andere Ende davon an einer Verbindungssektion (23) zwischen dem Schneidmessergehäuse (10) und der Auslassöffnungsabdeckung (20) festgehalten wird, und
wobei die Feder des Abdeckungsantriebsmechanismus (26) eine von einer Schraubenfeder, einer Torsionsfeder oder einer Blattfeder ist.

3. Rasenmähervorrichtung (8) nach Anspruch 1 oder 2, wobei:
der Verriegelungsantriebsmechanismus (34) eine Feder umfasst, wobei ein Ende davon mit dem Anschlagelement verbunden ist und das andere Ende mit dem Schneidmessergehäuse (10) verbunden ist, und
wobei die Feder des Verriegelungsantriebsmechanismus (34) eine von einer Spiralfeder, einer Schraubenfeder oder einer Blattfeder ist.

4. Rasenmähervorrichtung (8) nach einem der Ansprüche 1 - 3, wobei die Betriebssektion (33) eine in dem Anschlagelement bereitgestellte Manuellbetriebssektion umfasst.

5. Aufsitzrasenmäher, der die Rasenmähervorrichtung (8) nach einem der Ansprüche 1 - 4 aufweist.

## Revendications

1. Dispositif formant tondeuse à gazon (8) comprenant :
un logement de lame de coupe (10) ;
une lame de coupe (14) montée à l'intérieur du logement de lame de coupe (10) destinée à pouvoir tourner autour d'un axe (X) orienté verticalement, une ouverture de décharge (13) étant formée au niveau d'un côté externe latéral du logement de lame de coupe (10) pour décharger l'herbe coupée produite par la lame de coupe à l'extérieur du logement de lame de coupe (10) ; et
un couvercle d'ouverture de décharge (20) pouvant pivoter entre une posture de fermeture abaissée pour recouvrir un côté supérieur de l'ouverture de décharge (13) et une posture d'ouverture élevée pour découvrir l'ouverture de décharge (13) ;
un mécanisme de poussée de couvercle (26) raccordé au logement de lame de coupe (10) et au couvercle d'ouverture de décharge (20) pour pousser le couvercle d'ouverture de décharge (20) dans la posture de fermeture ;
un mécanisme de verrouillage (30) pouvant être commuté entre un état de verrouillage pour maintenir le couvercle d'ouverture de décharge (20) sous la posture de fermeture et une posture de déverrouillage pour permettre la commutation du couvercle d'ouverture de décharge (20) dans la posture d'ouverture ;
un mécanisme de poussée de verrouillage (34) raccordé au logement de lame de coupe (10) et au mécanisme de verrouillage (30) pour pousser le mécanisme de verrouillage (30) à l'état de verrouillage, le mécanisme de poussée de verrouillage (34) étant configuré pour appliquer une force de poussée sur le mécanisme de verrouillage (30) en réponse à la commutation du couvercle d'ouverture de décharge (20) dans la posture de fermeture ; et
une partie opérationnelle (33) pour commuter le mécanisme de verrouillage (30) dans la posture de déverrouillage contre la force de poussée du mécanisme de poussée de verrouillage (34) ;
**caractérisé en ce que** :
le mécanisme de verrouillage (30) comprend un élément de butée actionné, de manière pivotante, autour d'un arbre de support (32) orienté verticalement du logement de lame de coupe (10) ; et
l'élément de butée peut être déplacé entre une position de butée pour entrer en contact avec le couvercle d'ouverture de décharge (20) pour empêcher l'élévation du couvercle d'ouverture de décharge depuis la posture de fermeture, et une position de libération de butée pour libérer le contact.

2. Dispositif formant tondeuse à gazon (8) selon la revendication 1, dans lequel :
le mécanisme de poussée de couvercle (26) comprend un ressort ayant son extrémité retenue sur une partie de plaque supérieure (11) du logement de lame de coupe (10), et son autre extrémité retenue sur une partie de raccordement (23) entre le logement de lame de coupe (10) et le couvercle d'ouverture de décharge (20) ; et
dans lequel le ressort du mécanisme de poussée de couvercle (26) est l'un parmi un ressort hélicoïdal, un ressort hélicoïdal de torsion ou un ressort à lames.

3. Dispositif formant tondeuse à gazon (8) selon la revendication 1 ou 2, dans lequel :
le mécanisme de poussée de verrouillage (34) comprend un ressort ayant son extrémité raccordée à l'élément de butée et l'autre extrémité raccordée au logement de lame de coupe (10) ; et
dans lequel le ressort du mécanisme de poussée de verrouillage (34) est l'un parmi un ressort hélicoïdal, un ressort en hélice ou un ressort à lames.

4. Dispositif formant tondeuse à gazon (8) selon l'une quelconque des revendications 1 à 3, dans lequel la partie opérationnelle (33) comprend une partie à actionnement manuel prévue dans l'élément de butée.

5. Tondeuse à gazon autoportée ayant le dispositif formant tondeuse à gazon (8) selon l'une quelconque des revendications 1 à 4.
